# EUROPEAN PATENT APPLICATION

(11) **EP 4 449 851 A1**
(43) Date of publication of application: **23.10.2024**
(21) Application number: 23180791.8
(22) Date of filing: 21.06.2023
(51) Int. Cl.: A01D 43/10, A01B 33/02, A01D 69/02, A01F 12/56, H02K 7/00, H02K 7/14, H02K 21/22

(54) **A ROTOR WITH AN INTEGRATED ELECTRIC MOTOR FOR AN AGRICULTURAL MACHINE AND AN AGRICULTURAL MACHINE WITH SAID ROTOR**

(30) Priority: 19.04.2023 EP 23168833
(71) Applicant: Tehnos d.o.o., 3310 Zalec (SI)
(72) Inventor: Kisovar, Urban, 3312 Prebold (SI)
(74) Representative: Patentni Biro AF d.o.o.

(57) **Abstract**

The invention belongs to the field of agricultural machinery, more specifically to the field of design solutions relating to the drive of the rotating parts of agricultural machinery. The present invention relates to a rotor with an integrated electric motor for an agricultural machine and an agricultural machine with said rotor. A rotor comprises a base body, generally cylindrical in shape, of any diameter and/or length, which is at least partially hollow, wherein the electric motor is integrated into the said hollow part so that the rotor rotates as the electric motor rotates, with the electrical energy being transmitted from the source through the electrical conductors to the controller and through the electrical conductors to the electric motor. The said electric motor is integrated using a suitable shaft, which may or may not rotate and which is arranged to be fixed on the housing of the agricultural machine, and at least two bearings, which at the same time also support the rotor.

## Description

### Field of the invention

The invention belongs to the field of agricultural machinery, more specifically to the field of design solutions related to the drive of the rotating parts of agricultural machinery. The present invention relates to a rotor with an integrated electric motor for an agricultural machine and an agricultural machine with said rotor.

### Background of the invention and the technical problem

Agricultural machinery are mechanical structures and devices used in agriculture. There are many different types of machinery, from hand and power tools to tractors and many types of agricultural equipment that can be attached to a tractor. Agriculture follows the automotive industry on the road to electrification. By electrifying tractors which represent a source of electrical energy through batteries, generators, or some other means, it would be possible to electrify different tractor attachments, especially to provide higher torque. It is also possible that the energy source is located directly on the tractor attachment. The technical problem solved by the present invention is therefore the electrification of agricultural machinery, which would not require the hitherto known rotatable components to transfer the torque from the tractor. The invention aims to provide as universal a solution as possible, applicable to a wide range of agricultural machinery.

An example where the technical problem is particularly relevant are flail mowers. These are agricultural machines used to clean and accelerate decomposition and green manure. A flail mower is a tractor attachment that reduces the size of crop residues with working tools, called hammers, mounted on the rotor. The torque originates from the tractor, from where it is transferred to the bevel gearbox through the PTO shaft. The bevel gearbox changes the torque angle and increases the rotational speed. The torque is then transferred to the rotor with hammers through belt transmission. The known solution is belt transmission, described in patent ES2401273B1 and model ES1005925U, and gear transmission, known from the patent application SI P-202200197. Both types of transmission work decently, but belt transmission requires regular maintenance by changing the belts to keep the flail mower working properly and optimally. The further technical problem addressed by the present invention is therefore a different torque transfer solution.

### Prior art

In a review article, Scolaro et al. (2021; 10.1109/ACCESS.2021.3135037) comment on the electrification of agricultural machinery, but do not mention the solution proposed by the present invention.

The patent application EP2698052 describes a solution for agricultural machinery attachments, where the electric motor is mounted between the rotor and the housing, which is different from the present invention. Permanent magnets are attached to the rotor and electromagnetic coils are attached to the machine frame. This solution is more appropriate for discs (larger diameters and smaller lengths), when the installation in the rotor itself is not possible.

The patent application DE102010010861 describes a solution, appropriate for a rotary rake, pick-up rake rotor, harrow, or cultivator, where an electric motor is provided for the rotor drive, but it is installed differently than in the present invention.

The patent application DE102011017618 describes a combine harvester, with two rotors, one of which is connected to an electric motor. One possible embodiment of the solution described in this document involves arranging the electric motor inside one of the rotors. The said rotor with the electric motor is mounted on a hollow axle, which is connected to the supporting structure, and through which also extends the shaft supported by bearings opposite the hollow axle. The rotor shell with the electric motor is rotatably supported by bearings. The electric motor compounds a stator which is coupled to the hollow axle and a rotor which is coupled to the casing of the separating rotor and rotates during operation. The present invention differs from this solution in the way the electric motor is installed inside the rotor, which is applicable to a wide range of agricultural machinery, not just combine harvesters.

### The solution to the technical problem

The present invention solves the technical problem of electrification of agricultural machines, particularly those having a rotor, such as flail mowers. In this patent application a rotor is interpreted as a rotating part of the machine. The technical problem is solved as defined in the independent claim, while the preferred solutions are described in the dependent claims.

The essence of the invention is that an electric motor is integrated into the rotor of the agricultural machine, which results in fewer components and smaller transport dimensions. In this solution the electrical energy is transmitted from a tractor through electrical conductors to a controller and through the electrical conductors to the electric motor. Instead of the tractor, the agricultural machine itself can be the source of electrical energy; for example, a flail mower, to which a battery, generator or any other source of electrical energy is attached. The connection to the electric motor inside the rotor is achieved in the same way as in the embodiment with the electrified tractor. At the point of the end energy user, the electrical energy is converted into torque with the help of the electric motor. As a result, there is no need to use a PTO shaft, bevel gearbox, belt, or other types of transmission, which are used for example in flail mowers, which significantly simplifies the operation and maintenance of the machine.

For the electric motor to be integrated into the rotor of the machine, the rotor must be at least partially hollow so that it can receive the electric motor. According to the invention, the rotor with the integrated electric motor thus comprises:
- the base body, generally cylindrical in shape, of any diameter and/or length, which may be larger in diameter and smaller in length, to form a disc-shaped base body, said base body having a hollow part at least in one part thereof,
- the electric motor, integrated into the said hollow part using a suitable shaft, which may or may not rotate and which is mounted to the housing of the agricultural machine, and at least two bearings, which at the same time also support the rotor, whereby the electric motor is connected to the rotor by any means, preferably screws, so that when the electric motor rotates, the rotor also rotates,
- electrical conductors, which connect the electric motor to the tractor and transmit the electrical energy to the electric motor, which is the said electrical energy consumer.

The rotor can be hollow throughout its entire length, as in the case of flail mowers, or it can be hollow in only one part.

The rotor can be further equipped with other components necessary for the operation of the agricultural machine. Just as an example, flail mowers have hammers on the outside of the rotor, mowers have blades, and pick-up rakes have corresponding tines.

The integrated electric motor is controlled by a smart controller, which regulates the current through the winding according to the temperature of the electromagnetic coils and consequently controls the machine load. In case of high overloads, any suitable action can be taken to reduce the load, such as reducing the rotational speed, or completely stopping the motor. The controller can inform the end user of overloads and the state of the machine. The controller must be powerful enough, preferably more so or at least as strong as the electric motor, depending on the requirements of the motor and the flail mower. The controller operates preferably in a constant speed mode and ensures constant rotational speed, which is necessary in some and desirable in other cases for good functioning of the agricultural machine, preferably a flail mower. Depending on the torque or power requirements of the agricultural machine, the current can be adjusted through the electric motor or its coil winding. If the power or torque is to be increased, the current is increased, and if the power or torque is to be decreased, the current is decreased. The said controller can be located on the agricultural machine, for example a flail mower, or on the tractor, or may even not be present, if a different type of electric motor is chosen, such as for example an asynchronous electric motor, which operates at constant rotational speed, and does not require a controller.

Different types of electric motors can be used in the invention. Preferably, the electric motor is selected in a group comprising: radial flux, axial flux or combined electric motors, segmented stator core, hairpin stator core or monolith stator core electric motor, outrunner motors (a rotor with magnets is outside, while a stator core with electromagnetic coils is inside) and inrunner motors (a rotor with magnets is inside, while a stator core with electromagnetic coils is outside), AC electric motors, which can be either synchronous or asynchronous, and direct current electric motors, with brushes or brushless. Because of better efficiencies and better characteristics, the use of electric motors with permanent magnets, such as a brushless DC electric motor (BLDC) or a permanent magnet synchronous motor (PMSM) is preferred. For lighter loads, the use of other electric motors is also an option. In the preferred embodiment, the electric motor is a radial flux, outrunner, PMSM, segmented stator core electric motor.

If necessary, any other transmission can be integrated into the rotor (such as gear transmission etc.) along with the electric motor. This may be the case if the electric motor has a high rotational speed, which must be lowered using a planetary gearbox. If the rotors run on reduced rotational speed, then the integration of the electric motor with a suitable transmission is preferable.

The invention can be used in a wide range of agricultural machinery including:
- flail mowers, where the electric motor is integrated into the rotor with hammers,
- weeders, where the electric motor is integrated into the rotor,
- mowers, where the electric motor is integrated into the mower disc or cutter bar with blades,
- mowers, where the electric motor is integrated into the conditioner,
- rotocultivators, where the electric motor is integrated into the rotor,
- forestry winches, where the electric motor is integrated into the drum of the winch,
- rakes, loader wagons, balers, and similar machines, where the electric motor is integrated into the pick-up rotor,
- sweepers, where the electric motor is integrated into the sweeper brush,
- silage mixers where the electric motor is integrated into the milling head.

In a preferred embodiment the agricultural machine is a flail mower, which comprises:
- a housing of the flail mower, wherein within said housing a rotor with hammers is rotatably mounted,
- an electric motor, installed inside of the said rotor with hammers, the electric motor being fixed in the axial direction by any suitable means, preferably by screwing,
- electrical conductors, which connect the electric motor to a tractor or to a socket on the tractor in accordance with the guidelines and any standards in this field,
- a controller, which controls the operation of the electric motor,
- preferably a cooler, and, if necessary, other components known to the expert in the field.

Cooling can be implemented in any suitable way; air or water cooling, or both - air and water, can be used. The cooler may comprise a suitable pump, heat exchanger (cooling channels), fan and a tank for the coolant. Normally, a cooler is located on the machine, or on the tractor and the machine is connected to the cooler through the connecting pipes. The coolant then flows through the cooler or pipes to the controller, which preferably has cooling channels, and to the electric motor, which also preferably has cooling channels, where the coolant cools the controller and the electric motor, and the heated coolant can be returned to the cooler through a pipe, where it is recooled.

There are several advantages of an agricultural machine with an electric motor integrated into the rotor according to the invention:
- The machine comprises fewer components, as the torque is not transferred to the rotor from the tractor through another transmission, but instead electrical energy is transmitted. The torque is then generated at the point of the end energy user (the rotor), therefore only conductors and a controller are needed.
- Because of the transmission of electrical energy through the conductors directly to the rotor the machine has smaller transport dimensions, which can also increase the working width of the machine.
- Lower machine height, which allows the user to get closer to the crop, especially in permanent crops and in the case of cleaning farmland boundaries and in the municipal sector.
- Reduced weight: fewer components reduce the weight of the machine.
- Fewer components reduce the need for maintenance, and the integrated electric motor can also comprise permanently lubricated bearings, so no lubrication is needed.
- The machine can be attached closer to the tractor, as there is no PTO shaft requiring the machine to be attached sufficiently far away. This results in lower loads on the various components and has a positive effect on the tractor's centre of gravity.
- Overload protection due to the use of a controller, which can control the operation of the machine in accordance with the machine's detected loads.

The rotor with an integrated electric motor for an agricultural machine and an agricultural machine with said rotor according to the invention will be described in more detail below based on exemplary embodiments and figures showing:
- Figure 1: A flail mower with torque transfer through belt transmission (Figure 1a) or gear transmission (Figure 1b)
- Figure 2: A flail mower with an electric motor integrated into the rotor
- Figure 3: A comparison of different torque transfer options
- Figure 4: Sectional view of the rotor with an electric motor according to the first embodiment
- Figure 5: Second embodiment of the electric motor integrated into the rotor of the flail mower

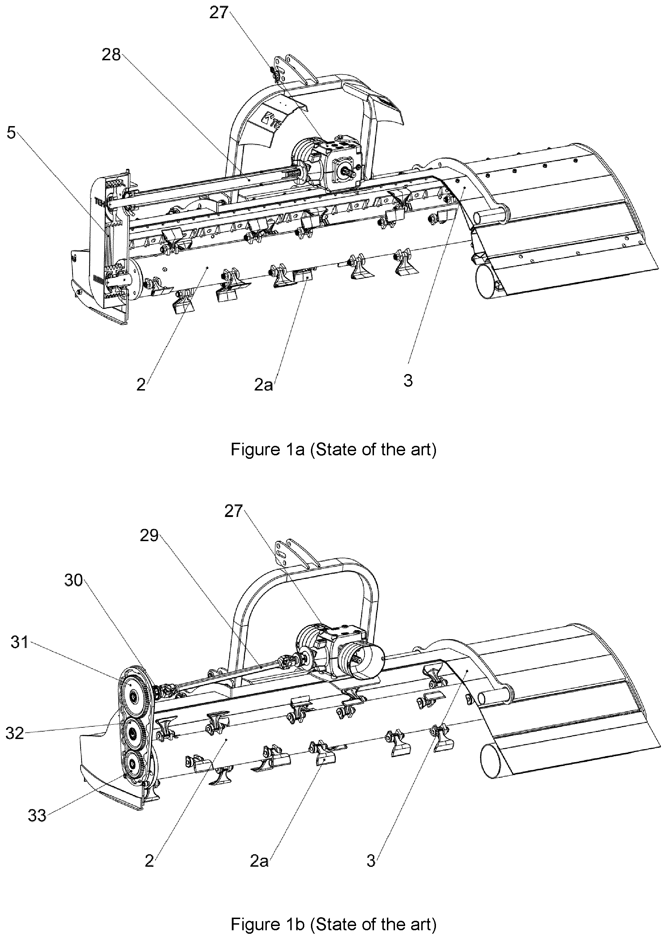

Figure 1a shows a known flail mower with belt transmission of the torque, where a flail mower comprises:
- A housing 3 of the flail mower, wherein within said housing 3 the rotor 2 with hammers 2a is rotatably mounted,
- a bevel gearbox 27, mounted on the flail mower housing 3, for the transfer of torque from the PTO shaft, when the said shaft is connected, to the connecting shaft 28,
- a connecting shaft 28, connected to the said bevel gearbox 27 at one end, and to the belt transmission 5 at the other end,
- belt transmission 5, connected to the connecting shaft 28 on one end, and to the rotor 2 with hammers 2a on the other end.

As shown in Figure 1b, a flail mower, where the belt transmission is replaced by gear transmission, comprises:
- the flail mower housing 3, within which the rotor 2 with hammers 2a is rotatably mounted,
- a bevel gearbox 27, mounted on the flail mower housing 3, for the transfer of torque from the PTO shaft, when the said shaft is attached, to the second PTO shaft 29,
- a second PTO shaft 29, which is connected to the said bevel gearbox 27 at one end, and to the upper gear 31 of the three gears of the gear transmission at the other end,
- gear transmission, which comprises three spur gears 31, 32, 33, in contact with each other and arranged vertically, whereby the lowermost gear 33 is connected to the rotor 2 with hammers 2a,
- a shear clutch 30, which is installed on the second PTO shaft 29,
- a feather key, which is installed between the lowermost gear 33 and the rotor 2 and which is fixed with a circlip in the axial direction.

These two solutions are known and differ from a possible embodiment of the flail mower in the sense that, according to the invention, an electric motor 1 is integrated into the rotor 2.

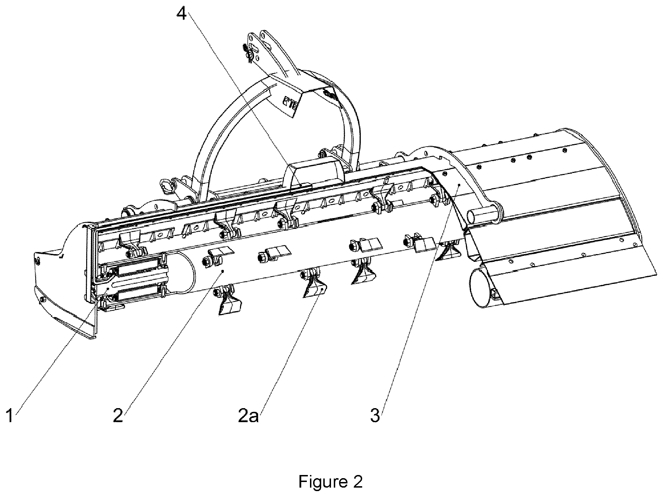

Figure 2 shows a possible embodiment of the invention, where the electric motor 1 is integrated into the rotor of the flail mower 2 with hammers 2a, which is rotatably mounted within the flail mower housing 3. The integrated electric motor 1 is a radial flux, outrunner, PMSM, segmented stator core electric motor, which is controlled by a dedicated controller 4, which transmits the electrical energy from the tractor in three phases to the electric motor 1. The integrated electric motor 1 not only provides torque but at the same time also supports the whole rotor 2. Two large bearings, 16 and 17, one at each end, are used for this purpose. The said bearings can be of any suitable type, preferably chosen among ball bearings, spherical roller bearings and tapered roller bearings. The most optimal solution is a ball bearing, as a spherical joint is foreseen.

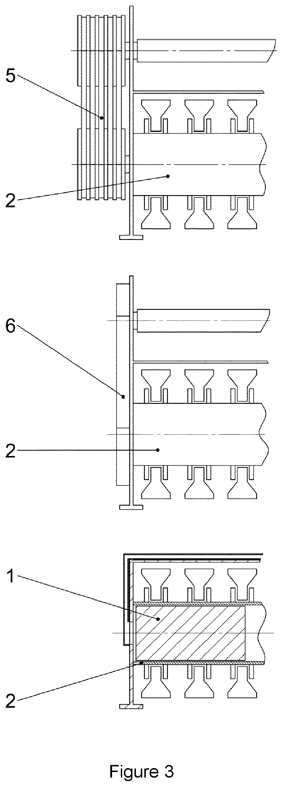

The advantage of integration of the electric motor 1 into the rotor of the flail mower 2 is the reduction in the drive or transmission width, which also means that the working width of the machine is increased. An illustration of the solution with belt transmission 5, gear transmission 6 and with the integrated electric motor 1 into the rotor 2 is shown in Figure 3.

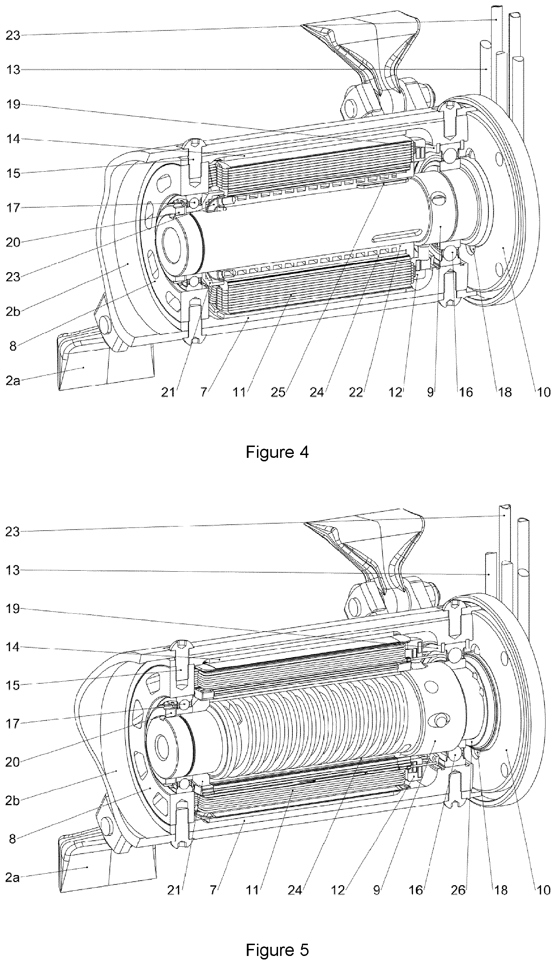

Figures 4 and 5 show embodiments of integration of the electric motor 1 into the rotor of the flail mower 2. Electric motor 1 therefore comprises:
- electric motor housing 7 with a cover 8, which is mounted, preferably screwed onto the rotor tube 2b,
- a stator, comprising:
   ∘ a shaft, where a stator shaft 9 is connected to the stator flange 10, which is secured using a spherical or any other joint, which prevents the flange 10 from rotation and compensates the rotor 2 play due to eccentricity,
   ∘ electromagnetic coils with winding 11, which are connected to the electrical conductors 13 through the busbar 12, and the said coils 11 are adapted to generate a magnetic field depending on the operation of the controller 4,
- the rotor of the electric motor, which comprises magnets 14, installed onto the electric motor housing 7, magnets 14 being adapted to react to the magnetic field created with the said coils 11, so that because of the magnetic field the magnets 14 can rotate around the said coils 11, which rotates the electric motor housing 7 and the rotor 2 due to said bearings 16 and 17.

The cover 8 of the housing 7 can be designed to operate as a fan blade, which further cools the electric motor and ensures air mixing. In this way, the water-cooling channels can be completely replaced, or the water cooling can be further improved, as described in more detail below.

The rotor 2 operates as follows. Using the electrical conductors 13 the electrical energy is being supplied through the busbar 12 in three phases onto the electromagnetic coils with winding 11, which are being switched on and off alternately thereby creating a magnetic field. The on and off switching of the different phases is controlled by the controller 4. The magnetic field, created by the coils 11, affects the magnetic field, created by the magnets 14, causing them to rotate around the coils 11. The magnets are glued onto the electric motor housing 7, which is screwed onto the rotor tube 2b with screws 15 together with the cover 8. Due to the on and off switching of the coils 11 the whole rotor 2 with hammers 2a rotates. The first bearing 16 and the second bearing 17 ensure that the electric motor housing 7 is rotating nicely around the stator shaft 9 and are over-dimensioned as they also carry the rotor tube 2b with hammers 2a. The stator shaft 9 is connected to the stator flange 10, the rotation of which is prevented by the spherical joint balls 18. The spherical joint between the stator shaft 9 and the stator flange 10 compensates the rotor 2 play due to eccentricity, thus reducing the load on both bearings 16 and 17. It also reduces the deformations inside the electric motor. Both bearings 16 and 17 are fixed in an axial direction, the first bearing 16 with circlips, the second bearing 17 with a lock nut and washer 20, which consequently also fixates the spacer ring of the stator 21. The electric motor is cooled using an external cooler on the flail mower or the cooler inside the tractor. Due to high temperatures generated on the electromagnetic coils with winding 11, cooling channels 22 are located between the coils 11 and the stator shaft 9. Through the connecting pipes 23 coolant is being supplied to the cooling channels. With its external shape, the cover of the cooling channels 24, which is fixed, preferably welded to the cooling channels 22, also prevents the electromagnetic coils with winding from being rotated. The cooling channels 22 are mounted onto the stator shaft 9 with feather keys 25 and a spacer ring 21.

Alternatively (Figure 5), the cooling channels are made directly on the stator shaft 9. They are covered with a cooling channel cover 24, which is fixed, preferably welded onto the stator shaft 9, which again protects the electromagnetic coils with winding 11 from rotation. The spherical adapter 26 is combined with the stator flange 10 and after the insertion of the spherical joint balls 18 the adapter 26 is mounted onto the stator shaft 9. The spherical adapter 26 is protected in the axial direction by a ring, screwed onto the stator shaft 9, and the pins protect it from rotating. The spherical adapter 26 also fixes the bearing 16 in the axial direction. This design simplifies the assembly process.

Compared to the known solutions, the flail mower with the integrated electric motor is approximately 5% lighter. This means a lower final price of the flail mower, a lower centre of gravity of the flail mower and, consequently, also lower ground loads. A lower centre of gravity and reduced weight are very important when working on steep slopes, as the risk of the tractor tipping over is very high. Hence, the present solution provides greater safety and allows the user to work on an even steeper terrain. At the same time, the reduced weight of the flail mower also results in fuel savings.

## Claims

1. A rotor (2) with an integrated electric motor (1) for an agricultural machine, wherein the rotor comprises a base body, generally cylindrically shaped of any diameter and/or length, said base body being at least partially hollow and arranged to receive the electric motor (1) in said hollow part, so that the rotor (2) is arranged to rotate during electric motor (1) rotation, wherein the electrical energy is transmitted from a source via electrical conductors (13) to the electric motor (1), which is arranged to transform electric energy into torque.

2. The rotor (2) according to claim 1, wherein the electric motor (1) is installed in said hollow part of the rotor with:
- a suitable shaft, which may rotate or not, wherein said shaft is arranged to be mounted to the housing of an agricultural machine,
- and at least two bearings (16 and 17), which are arranged to additionally support the rotor (2).

3. The rotor (2) according to claim 1 or claim 2, wherein the rotor is connected to the electric motor (1) with screws (15).

4. The rotor (2) according to claim 2 or claim 3, wherein said bearings (16 and 17) are selected in the group comprising ball bearings, spherical roller bearings and tapered roller bearings.

5. The rotor (2) according to any of the preceding claims, wherein the electric motor (1) is connected to a controller (4) so that the electrical energy is transmitted from the source through electrical conductors (13) to the controller (4) and then through electrical conductors (13) to the electric motor (1).

6. The rotor (2) according to any of the preceding claims, wherein the electric motor (1) comprises:
- a housing (7) of the electric motor (1) with a cover (8) installed, preferably screwed, in a tube (2b) of the rotor (2),
- a stator comprising
∘ a shaft (9) connected to a flange (10) of the stator, said flange (10) being secured with a spherical or any other connection that prevents rotation of the flange (10) and compensates the rotor (2) play due to eccentricity,
∘ electromagnetic coils with winding (11) which are through a busbar (12) connected with electrical conductors (13), wherein said coils (11) are arranged to create a magnetic field depending on the operation of the controller (4),
- a rotor comprising magnets (14) installed on the housing (7) of the electric motor (1), wherein said magnets (14) are arranged to react to the magnetic field created with said coils (11), so that due to the magnetic field the magnets (14) are arranged to rotate around said coils (11), which rotates the electric motor housing (7) and also the rotor (2) due to said bearings (16 and 17).

7. The rotor (2) according to any of the preceding claims, wherein the controller (4) is arranged to regulate the current through the winding according to the temperature of the electromagnetic coils (11) and consequently controls the load, wherein in case of increased power or torque, the current through the coils (11) is increased, wherein in case of decreased power or torque, the current through the coils (11) is decreased, wherein in case of large overloads any suitable action is taken to reduce the load.

8. The rotor (2) according to any of the preceding claims, wherein the power of the controller (4) is higher or at least the same as the power of the electric motor (1).

9. The rotor (2) according to any of the preceding claims, wherein the controller (4) is a tractor controller or a separate controller of an agricultural machine.

10. The rotor (2) according to any of the preceding claims, wherein the electric motor (1) is cooled with the cover (8) designed as a fan blade arranged to rotate and thus allow air cooling.

11. The rotor (2) according to any of the preceding claims, wherein the electric motor (1) is cooled with
- cooling channels (22) provided between coils (11) and stator shaft (9), covered with a cover (24), which is welded on the cooling channels (22),
or
- cooling channels provided on the stator shaft (9), covered with a welded cover (24).

12. The rotor (2) according to any of the preceding claims, wherein the electric motor (1) is selected in the group comprising: radial flux, axial flux or combined electric motors, segmented stator core, hairpin stator core or monolith stator core electric motor, outrunner motors, inrunner motors, AC electric motors, which can be either synchronous or asynchronous, and direct current electric motors, with brushes or brushless.

13. The rotor (2) according to the preceding claim, wherein the electric motor (1) is a brushless DC electric motor (BLDC) or a permanent magnet synchronous motor (PMSM), preferably a radial flux, outrunner, PMSM, segmented stator core electric motor.

14. The rotor (2) according to any of the preceding claims, wherein in addition to the electric motor (1) any torque or power transfer is installed.

15. The rotor (2) according to any of the preceding claims, wherein the rotor (2) is hollow throughout its entire length.

16. The rotor (2) according to any of the preceding claims, wherein the rotor (2) is provided with additional components such as tines, blades, hammers (2a) and similar elements.

17. An agricultural machine with at least one rotor (2) according to any of the preceding claims.

18. The agricultural machine according to the preceding claim, wherein the agricultural machine is selected in the group comprising:
- flail mowers, where the electric motor is integrated into the rotor (2) with hammers (2a),
- weeders, where the electric motor is integrated into the rotor,
- mowers, where the electric motor is integrated into the mower disc or cutter bar with blades,
- mowers, where the electric motor is integrated into the conditioner,
- rotocultivators, where the electric motor is integrated into the rotor,
- forestry winches, where the electric motor is integrated into a drum of the winch,
- rakes, loader wagons, balers, and similar machines, where the electric motor is integrated into a pick-up rotor,
- sweepers, where the electric motor is integrated into a sweeper brush,
- silage mixers where the electric motor is integrated into a milling head.

19. The agricultural machine according to the preceding claim, wherein the agricultural machine is a tractor flail mower comprising:
- a housing (3) of the flail mower, wherein within said housing (3) the rotor (2) with hammers (2a) is rotatably mounted,
- the electric motor (1), installed inside of the said rotor (2) with hammers (2a), the electric motor (1) being fixed in the axial direction by any suitable means, preferably by screwing,
- electrical conductors (13), which connect the electric motor (1) to a tractor or to a socket,
- a controller (4), which controls the operation of the electric motor (1).

20. The agricultural machine according to the preceding claim, wherein the electric motor (1) comprises:
- the housing (11) with the cover (8) installed, preferably screwed, into the tube (2b) of the rotor (2),
- the stator with the shaft, wherein the stator shaft (9) is connected to a flange (10) of the stator, which is secured with a spherical or any other connection that prevents rotation of the flange (10),
- electromagnetic coils with winding (11), which are through a busbar (12) connected to the electrical conductors (13), and wherein said coils (11) are arranged to create a magnetic field depending on the operation of the controller (4),
- magnets (14) installed on the housing (7) of the electric motor (1), wherein said magnets (14) are arranged to react to the magnetic field created by said coils (11), so that due to the magnetic field the magnets (14) rotate around said coils (11), which rotates the housing (7) of the electric motor and the rotor (2) due to said bearings (16 and 17), and
- optionally a cooler for cooling the machine and/or the rotor (2) and/or the electric motor (1).

21. The agricultural machine according to the preceding claim, wherein the cooler comprises a suitable pump, cooling channels, a fan and a tank for a coolant, wherein connecting pipes are arranged to lead the coolant to the controller (4) and the electric motor (1), which is preferably also provided with cooling channels, where the coolant can cool the controller (4) and the electric motor (1), and wherein the heated coolant is returned to the cooler for re-cooling.
